(19) Europäisches Patentamt
European Patent Office
Office européen des brevets

(11) Numéro de publication : **0 332 513 B1**

(12) **FASCICULE DE BREVET EUROPEEN**

(45) Date de publication du fascicule du brevet :
**10.06.92 Bulletin 92/24**

(51) Int. Cl.$^5$ : **C09D 17/00, D21H 17/13, D21H 19/36**

(21) Numéro de dépôt : **89400591.7**

(22) Date de dépôt : **03.03.89**

(54) **Suspension aqueuse stable de silico-aluminates.**

Le dossier contient des informations techniques présentées postérieurement au dépôt de la demande et ne figurant pas dans leprésent fascicule.

(30) Priorité : **09.03.88 FR 8803018**

(43) Date de publication de la demande :
**13.09.89 Bulletin 89/37**

(45) Mention de la délivrance du brevet :
**10.06.92 Bulletin 92/24**

(84) Etats contractants désignés :
**AT BE CH DE ES FR GB GR IT LI LU NL SE**

(56) Documents cités :
**EP-A- 0 044 190
EP-A- 0 118 663
EP-A- 0 154 291**

(56) Documents cités :
**EP-A- 0 233 689
DE-A- 1 943 731
FR-A- 2 264 129
US-A- 3 291 626
Comprehensive Inorganic, Chemistry, Pergamon Press, 1973, p. 470**

(73) Titulaire : **RHONE-POULENC CHIMIE
25, quai Paul Doumer
F-92408 Courbevoie Cédex (FR)**

(72) Inventeur : **Dromard, Adrien
84, rue du Château
F-92600 Asnieres (FR)**
Inventeur : **Richard, Claude
6, rue Ozanam
F-69001 Lyon (FR)**

(74) Mandataire : **Dubruc, Philippe et al
RHONE-POULENC CHIMIE Service Brevets
Chimie 25, quai Paul-Doumer
F-92408 Courbevoie Cédex (FR)**

## Description

La présente invention concerne la préparation de suspensions aqueuses stables de silico-aluminate ainsi que leur utilisation dans l'industrie papetière.

Les suspensions ou bouillies aqueuses de silico-aluminates sont utilisées dans plusieurs domaines notamment dans l'industrie papetière.

Or, ces suspensions ont tendance à sédimenter ou à gélifier ce qui les rend difficilement transportables ou stockables. On observe en effet très souvent à l'issue du transport ou après une plus ou moins longue période de stockage le dépôt d'une couche dure de pigment surmontée d'une bouillie plus fluide mais pauvre en matière sèche. Il est de plus souvent impossible de remettre le silico-aluminate en suspension ou d'obtenir une bouillie présentant une viscosité suffisamment faible pour être pompable et donc utilisable industriellement. Il y a donc là un problème certain.

Il a été envisagé de stabiliser des suspensions aqueuses de certains silico-aluminates de synthèse cristallins : EP-A-0154291 décrit des suspensions aqueuses de zéolite stabilisées par la gomme xanthane ; EP-A-0233689 propose de stabiliser des dispersions aqueuses de zéolite par addition d'un lipopolysaccharide produit par un microorganisme appartenant à l'espèce Acineto bactor.

L'objet principal de l'invention est donc une suspension de silico-aluminate amorphe qui soit stable, pompable et dispersable après plusieurs jours de stockage.

Dans ce but, la suspension aqueuse stable selon l'invention est caractérisée en ce qu'elle comprend un silico-aluminate et à titre de stabilisant une biogomme.

On a pu constater qu'après plusieurs jours de stockage, les suspensions de l'invention ne sédimentaient pas ou peu et en tout cas conservaient une viscosité convenable.

D'autres caractéristiques et avantages de l'invention seront mieux compris à la lecture de la description et des exemples concrets mais non limitatifs qui vont suivre.

Selon un mode de réalisation particulier de l'invention la suspension est à base d'un silico-aluminate alcalin, notamment de sodium.

Dans ce dernier cas, on peut citer les produits de formule :

$xNa_2O, Al_2O_3, y SiO_2, wH_2O$ dans laquelle
$x = 0,1$ à $2$ ; $y = 1,5$ à $16$ , $w = 0,3$ à $4$.

Les silico-aluminates de synthèse amorphes susceptibles d'être utilisés dans le cadre de l'invention peuvent être obtenus par toute méthode connue, cette méthode ne rentrant pas dans le cadre de l'invention. Généralement on procède par neutralisation d'un silicate avec un sel d'aluminium notamment du sulfate d'aluminium ou un aluminate.

Selon un mode de réalisation préférentiel de l'invention, la suspension est à base d'un silico-aluminate obtenu par précipitation et constitué par un gâteau de filtration issue de la réaction de précipitation et délité.

En d'autres termes, on réalise la précipitation du silico-aluminate notamment par réaction d'un silicate avec du sulfate d'aluminium ou un aluminate comme on l'a vu plus haut. On filtre ensuite le milieu réactionnel et on obtient un gâteau de filtration qui est lavé sinécessaire. Ensuite ce gâteau est délité et forme ainsi une suspension qui, dans le mode de réalisation évoqué ici, constitue la suspension de l'invention stabilisée par le moyen décrit ci-dessous.

On peut noter en outre qu'il est possible de rajouter à cette suspension du silico-aluminate sec notamment sous forme pulvérulente de manière à augmenter la teneur en matière sèche de la suspension.

Le stabilisant utilisé est une biogomme.

Les biogommes sont des polysaccharides de poids moléculaire élevé, généralement supérieur à un million, obtenus par fermentation d'un hydrate de carbone sous l'action d'un microorganisme.

Comme biogommes pouvant être utilisées dans la suspension faisant l'objet de la présente invention, on peut citer celles obtenues par fermentation sous l'action de bactéries ou de champignons appartenant au genre Xanthomonas telles que Xanthomonas begoniae, Xanthomonas campestris, Xanthomonas carotae, Xanthomonas hederae, Xanthomonas incanae, Xanthomonas malvacearum, Xanthomonas papavericola, Xanthomonas phaseoli, Xanthomonas pisi, anthomonas vasculorum, Xanthomonas vesicatoria, Xanthomonas vitians, Xanthomonas pelargonii ; au genre Arthrobacter et plus particulièrement les espèces Arthrobacter stabilis, Arthrobacter viscosus ; au genre Erwinia ; au genre Azotobacter et plus particulièrement l'espèce Azotobacter indicus ; au genre Agrobacter et plus particulièrement les espèces Agrobacterium radiobacter, Agrobacterium rhizogènes, Agrobacter tumefaciens ; au genre Alicaligènes et plus particulièrement l'espèce Alcaligènes faecalis ; au genre Rhizobium ; au genre Sclerotium et plus particulièrement les espèces Sclerotium rolfsii et Sclerotium glucanicum ; au genre Corticium ; au genre Sclerotinia ; au genre Stromatinia.

Comme biogomme pouvant être obtenue par fermentation par les microorganismes décrits ci-dessus, on utilise tout particulièrement la gomme obtenue par fermentation des bactéries du genre Xanthomonas.

Bien entendu, on ne sortirait pas du cadre de la présente invention en utilisant comme stabilisant un mélange de biogommes.

Il est avantageux d'utiliser en combinaison avec la biogomme un agent antibactérien du type formaldéhyde, glutaraldéhyde benzoate de sodium par exemple.

La biogomme est généralement utilisée dans une quantité qui varie entre 0,05 % et 5 % en poids par rapport à la matière sèche et plus particulièrement entre 0,1 et 1 %.

Le taux de matière sèche de la suspension est habituellement d'au moins 15 %, de préférence d'au moins 25%. La teneur en aluminium exprimée en $Al_2O_3$ varie le plus souvent entre 0,5 et 10 %.

Selon un autre mode de réalisation préférentiel de l'invention on fait subir un broyage à la suspension. Ce broyage permet de diminuer le diamètre médian des particules du silico-aluminate.

Le broyage est conduit de manière à obtenir par exemple un silico-aluminate présentant un diamètre médian de particules compris entre 0,5 et 20 $\mu$m et plus particulièrement 1 et 10 $\mu$m.

On a constaté que le broyage permettait d'augmenter la stabilité dans le temps de la suspension.

On notera que d'une manière générale dans le cas où l'on broie la suspension on ajoute la biogomme après le broyage. Une addition de la biogomme à la suspension avant le broyage n'est toutefois pas exclue.

Les suspensions de l'invention peuvent être utilisées avantageusement dans l'industrie papetière dans la fabrication du papier ou du carton notamment comme charge soit dans la masse soit pour le couchage du papier ou du carton. Bien entendu, elles conviennent de même pour toutes les applications habituelles de ce type de produit, par exemple pour les compositions de polissage, les liants pour compositions catalytiques, les adjuvants pour peintures, pour béton et matériaux de constructions et plastiques. Des exemples vont maintenant être donnés.

EXEMPLE 1

On prélève directement sur le filtre à la fabrication un gâteau de silico-aluminate de sodium de composition chimique suivant :
80,0 % de $SiO_2$ - 9,35 % en $Al_2O_3$ - 5,75 % en $Na2O$ et présentant à l'état fini après séchage une surface BET de 100 m2/g et une prise DOP de 170 ml/100 g. La perte au feu de ce gâteau est de 74,3 %.

Ce gâteau est délité de façon à obtenir une bouillie fluide pompable dont le pH est de 9,5.

Cette bouillie est reprise au Broyeur DYNO de laboratoire muni d'un bol de verre de 0,6 l refroidi par double enveloppe et contenant 450 cm3 de billes de verre de diamètre 1,5 mm. La vitesse de broyage est de 2000 T/mn et le débit en sortie de broyeur de 250 cm3/mn.

Dans la suspension broyée très fluide ainsi obtenue (diamètre médian des particules de 2,2 $\mu$m), on introduit à l'aide d'une turbine 4 pales de la gomme xanthane du type Rhodopol 50 MC commercialisée par la Société RHONE-POULENC dans les proportions suivantes :
- 450 g de bouillie broyée (115 g de matière sèche).
- 1,15 g de Rhodopol 50 MC.
Le mélange est agité 40 mn à 600 T/mn.

Après 10 jours, on n'observe pas de dépôt. Après 40 jours on observe un volume sédimentaire (volume solide/volume total) inférieur à 1%.

La fluidité du produit est bonne, sa viscosité reste stable dans le temps.

EXEMPLE 2 COMPARATIF

La bouillie préparée et broyée comme dans l'exemple 1 est laissée au repos sans addition de gomme xanthane.

Au bout de 4 jours on observe une sédimentation totale. La remise en suspension est impossible.

EXEMPLE 3

On part du gâteau délité de l'exemple 1 mais on ne le broie pas. Le diamètre médian de particules est de 11 $\mu$m.

A 450 g de bouillie (115 g de matière sèche) on rajoute 0,25 g de RHODOPOL 50 MC. On agite comme dans l'exemple 1.

Après 10 jours on n'observe pas de dépôt. Après 40 jours on observe un volume sédimentaire de l'ordre de 5 %.

EXEMPLE 4

On part du gâteau délité de l'exemple 1. A 3500 g de ce gâteau on rajoute 135 cm3 d'$H_2SO_4$ 1,5 N et 569 g de silico-aluminate sec pulvérulent. La teneur en solide de la suspension est alors de 34 %, le pH est de 8,9.

On broie et on obtient une suspension très fluide (diamètre médian de particules 2,3 $\mu$m).

A cette suspension on rajoute 2 g de RHODOPOL 50 MC et on agite le mélange comme dans l'exemple 1.

Le milieu obtenu du fait de sa concentration se présente sous la forme d'un gel de faible viscosité (après 17 jours la viscosité est de 57 mPa.s) qui peut être aisément fluidifié sous une faible énergie de contrainte (1 minute à 500 t/mn).

EXEMPLE 5

On part d'un silico-aluminate de sodium sec ayant la formule suivante $Na_2O$, $Al_2O_3$, 14 $SiO_2$, 3$H_2O$ de pH 10, d'une perte au feu à 900°C de 12 % d'une prise DOP 170 ml/100 g, d'une surface BET de 100 m2/g et d'une densité tassée de 0,3.

A 2500 g d'une suspension de 575 g de ce produit sec dans l'eau sont ajoutés 3 g de RHODOPOL 50 MC. On agite 1 heure. Le pH final est de 9,7.

Au bout de 7 jours, la suspension est toujours fluide. Au bout de 10 jours on observe un volume sédimentaire de 15 %. La suspension peut être aisément fluidifiée sous une faible énergie de contrainte (1 minute à 500 t/mn).

Bien entendu l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Suspension aqueuse stable caractérisée en ce qu'elle comprend un silico-aluminate de synthèse amorphe et, à titre de stabilisant, une biogomme.

2. Suspension selon la revendication 1, caractérisée en ce qu'elle comprend un silico-aluminate alcalin, notamment de sodium.

3. Suspension selon la revendication 2, caractérisée en ce qu'elle comprend un silico-aluminate amorphe de formule :
$$x\ Na_2O,\ Al_2O_3 y SiO_2,\ w\ H_2O \text{ dans laquelle}$$
$$x = 0{,}1 \text{ à } 2 \text{ ; } y = 1{,}5 \text{ à } 16 \text{ ; } w = 0{,}3 \text{ à } 4.$$

4. Suspension selon l'une des revendications 1 à 3, caractérisée en ce qu'elle comprend un silico-aluminate obtenu par précipitation et constitué par un gâteau de filtration issu de la réaction de précipitation et délité.

5. Suspension selon l'une des revendications précédentes caractérisée en ce qu'elle comprend une biogomme qui a été obtenue par fermentation d'hydrate de carbone par des bactéries ou des champignons appartenant aux genres Xanthomonas, Arthrobacter, Azotobacter, Agrobacter, Alcaligènes, Erwinia, Rhizobium, Corticium, Sclerotinia, Stromatinia ou Sclerotium.

6. Suspension selon la revendication 5 caractérisée en ce qu'elle comprend une gomme xanthane.

7. Suspension selon l'une des revendications précédentes caractérisée en ce qu'elle a subi un broyage.

8. Utilisation des suspensions selon l'une des revendications précédentes dans la fabrication des papiers et cartons.

## Patentansprüche

1. Stabile wäßrige Suspension, dadurch gekennzeichnet, daß sie ein amorphes synthetisches Silicoaluminat und als Stabilisator einen Biogummi enthält.

2. Suspension nach Anspruch 1, dadurch gekennzeichnet, daß sie ein Alkali-, vor allem Natrium-silicoaluminat enthält.

3. Suspension nach Anspruch 2, dadurch gekennzeichnet, daß sie ein amorphes Silicoaluminat der Formel
$$x\ Na_2O,\ Al_2O_3 y SiO_2,\ w\ H_2O$$
enthält, in der x = 0,1 bis 2, y = 1,5 bis 16 und w = 0,3 bis 4 ist.

4. Suspension nach einem der Ansprüche 1 bis 3, dadurch gekennzeichnet, daß sie ein Silicoaluminat enthält, das durch Fällung erhalten worden ist und aus einem Filterkuchen besteht, der bei der Fällungsreaktion entstanden und zerteilt ist.

5. Suspension nach einem der vorangehenden Ansprüche, dadurch gekennzeichnet, daß sie einen Biogummi enthält, der durch Fermentation von Kohlenwasserstoff(en) mit Bakterien oder Pilzen, die den Arten Xanthomonas, Arthrobacter, Azotobacter, Agrobacter, Alcaligenes, Erwinia, Rhizobium, Corticium, Sclerotinia, Stromatinia oder Sclerotium angehören, erhalten worden ist.

6. Suspension nach Anspruch 5, dadurch gekennzeichnet, daß sie einen Xanthangummi enthält.

7. Suspension nach einem der vorangehenden Ansprüche, dadurch gekennzeichnet, daß sie vermahlen worden ist.

8. Verwendung der Suspensionen nach einem der vorangehenden Ansprüche bei der Herstellung von Papieren und Kartons.

## Claims

1. A stable aqueous suspension characterised in that it comprises a synthetic amorphous silico-aluminate and, as a stabilising agent, a biogum.

2. A suspension according to claim 1 characterised in that it comprises an alkali metal silico-aluminate, in particular of sodium.

3. A suspension according to claim 2 characterised in that it comprises an amorphous silico-aluminate of the following formula:
$$x\ Na_2O,\ Al_2O_3 y SiO_2,\ w\ H_2O \text{ in which}$$
$$x = 0.1 \text{ to } 2; \ y = 1.5 \text{ to } 16; \ w = 0.3 \text{ to } 4.$$

4. A suspension according to one of claims 1 to 3 characterised in that it comprises a silico-aluminate which is produced by precipitation and formed by a filter cake which results from the precipitation reaction and is slaked.

5. A suspension according to one of the preceding claims characterised in that it comprises a biogum which was produced by fermentation of carbohydrate by bacteria or fungi belonging to the genera Xanthomonas, Arthrobacter, Azotobacter, Agrobacter, Alcaligenes, Erwinia, Rhizobium, Corticium, Sclerotinia, Stromatinia or Sclerotium.

6. A suspension according to claim 5 characterised in that it comprises a xanthane gum.

7. A suspension according to one of the preceding claims characterised in that it has been subjected to a crushing operation.

8. Use of the suspensions according to one of the preceding claims in the production of papers and cardboards.